Europäisches Patentamt

European Patent Office

Office européen des brevets

(19)

(11) Numéro de publication: **0 101 344**
**A1**

(12) # DEMANDE DE BREVET EUROPEEN

(21) Numéro de dépôt: 83401444.1

(22) Date de dépôt: 12.07.83

(51) Int. Cl.³: **G 06 K 19/02**
**G 06 K 19/08, G 06 K 1/12**

(30) Priorité: 26.07.82 FR 8213149

(43) Date de publication de la demande:
22.02.84 Bulletin 84/8

(84) Etats contractants désignés:
AT BE CH DE GB IT LI LU NL SE

(71) Demandeur: CROUZET
128, Avenue de la République
F-75011 Paris(FR)

(72) Inventeur: Morille, Robert
5, rue Pierre de Coubertin
F-26320 Saint Marcel Les Valence(FR) –

(72) Inventeur: Vergues, Jacques
10, rue Couperin
F-26000 Valence(FR)

(74) Mandataire: Bloch, Robert et al,
39 avenue de Friedland
F-75008 Paris(FR)

(54) Support d'informations à éléments de mémoire magnétique thermo-destructibles.

(57) Support d'informations comportant des éléments de mémoire magnétique destructibles de façon irréversible par élévation de température.

Il comprend sur au moins une face du support (1), découpé dans un matériau isolant et amagnétique, une succession de domaines, comportant une sous-couche (2) en métal bon conducteur de l'électricité, recouverte par un élément de mémoire magnétique thermodestructible à couche magnétique et couches différentes.

Le support d'informations permet de réaliser des cartes de crédit ou des tickets pour dispositifs de paiement dont le coût est variable.

FIG. 1

EP 0 101 344 A1

## Support d'informations à éléments de mémoire magnétique thermo-destructibles.

La présente invention concerne un support d'informations comportant des éléments de mémoire magnétique, réalisés par des couches successives de matériaux magnétiques et de matériaux diffusants, desctructibles de façon irréversible par élévation de température.

On connaît déjà, tel que décrit dans la demande de brevet français n° 80 11 320 au nom de la demanderesse, un support d'informations revêtu sur toute une face d'une couche mince de cuivre sur laquelle sont déposés les éléments de mémoire thermodestructible. Pour obtenir la destruction du magnétisme dans un laps de temps suffisamment court, ces éléments de mémoire, ou domaines d'informations, doivent être portés à une température de l'ordre de 250° à 300°C. Plusieurs procédés permettent d'obtenir ce résultat.

Les domaines peuvent être chauffés par contacts avec une ou plusieurs résistances, par exemple des résistances en couche épaisse, déposées sur un support en steatite ou alumine. Ils peuvent également être soumis au flux lumineux d'une lampe, concentré par des moyens optiques, ou chauffé directement par effet Joule.

Tous ces procédés présentent des inconvénients. Soit ils nécessitent des sources d'énergie importantes, de plusieurs dizaines de watts, soit ils brûlent la surface du support ce qui provoque l'encrassement des têtes de lecture magnétiques lors de l'exploitation du support d'information.

Pour éviter ces inconvénients, la demanderesse a songé à ne concentrer l'énergie qu'au sein même de chaque domaine ce qui peut être obtenu par le procédé de chauffage par hautes fréquences et l'invention a pour objet un support d'informations adapté à ce procédé.

A cet effet, le support d'informations objet de l'invention est caractérisé en ce que sur au moins une face du support, découpé dans un matériau isolant et amagnétique, il est prévu une succession de domaines, comprenant une couche en métal conducteur de l'électricité, recouverte par un élément de mémoire magnétique thermodestructible.

L'expérience a montré que les couches, constituant un élément mémoire, ont une résistivité trop élevée pour qu'ils s'y développe un courant induit suffisant. Aussi, chaque domaine d'information est constitué par une sous couche en métal bon conducteur de l'électricité dont l'épaisseur est relativement importante par rapport aux couches magnétiques et diffusantes. En effet, dans la pratique, seuls les courants induits dans la sous couche conductrice interviennent dans l'élévation de température des domaines lorsque ceux-ci sont soumis à un champ magnétique haute fréquence.

Le dispositif de chauffe consiste en un circuit générateur HF classique, alimentant une bobine disposée autour d'une ferrite torique, fendue. Le maximum de rendement, c'est-à-dire de lignes de champ magnétique actives traversant un domaine, est obtenu lorsque le support d'informations est introduit dans la fente de la ferrite jouant le rôle d'entrefer. Dans ces conditions on peut estimer que la perte P, c'est-à-dire l'énergie dissipée dans la partie métallique d'un domaine, est de la forme :

$$P = f \left( \frac{D^2 . \, e. \, F^2 . \, B^2}{\rho} \right)$$

où D représente la largeur d'un domaine,

e " l'épaisseur de métal d'un domaine,

F " la fréquence du générateur,

B " l'induction,

$\rho$ " la résistivité du métal utilisé.

Le dessin annexé illustre à titre d'exemple un mode de réalisation d'un support d'information, ainsi que de son dispositif de chauffe, conforme à la présente invention.

La figure 1 représente une vue en coupe, agrandie, du support, au niveau de deux domaines, et

La figure 2 est un schéma électrique du dispositif HF alimentant le dispositif d'effacement thermique .

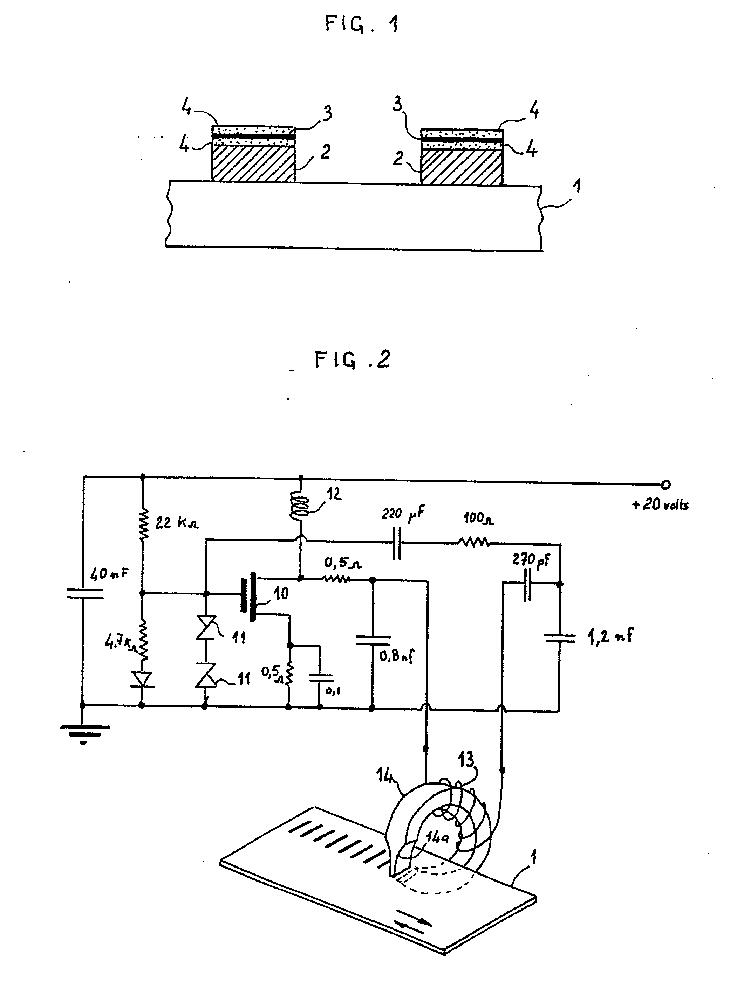

Tel que représenté, figure 1, le support d'informations se présente sous la forme d'une carte ou ticket rectangulaire découpé dans un matériau isolant et amagnétique, tel que par exemple du verre époxy ou polyimide, du matériau de la marque Kapton ou du papier de la marque Nomex. Tous ces matériaux, dont la liste n'est pas limitative, sont choisis en fonction de leur tenue à la température et de leurs bonnes caractéristiques mécaniques leur permettant de circuler dans des lecteurs magnétiques sans usure prématurée. Sur une face de ce support 1 sont disposés les domaines distincts d'informations magnétisables. Ces domaines se présentent sous la forme de petits bâtonnets d'une longueur de l'ordre de 4 mm pour une largeur de 0,6 mm environ, à titre d'exemple. Ils sont uniformément répartis les uns à la suite des autres sur une ou plusieurs lignes parallèles. Chaque domaine comporte une sous couche de cuivre 2, dont l'épaisseur, qui peut varier de 5 µ à 40 µm, est suffisante pour que puisse s'y développer des courants induits importants. Sur cette sous couche de cuivre sont successivement déposées, par exemple par électrolyse, une première couche diffusante 4 telle que de l'indium, bismuth ou un alliage de plomb-étain, puis une couche magnétisable 3, telle que du nickel cobalt, puis une seconde couche diffusante 4. Ces couches ont chacune une épaisseur de 500 Å à 1000 Å environ. Cette disposition en sandwich est la plus favorable pour la dispersion du diffusant dans la couche magnétique lors d'une élévation de température.

La réalisation d'un tel support d'informations peut être avantageusement faite à partir d'éléments de plaques standards déjà recouvertes d'une épaisseur de cuivre de 17,5 ou 35 $\mu$m. Après l'électrolyse des divers éléments constituant la mémoire, le cuivre superflu est alors enlevé par gravure.

La figure 2 représente un générateur HF permettant l'élévation de température et la destruction du magnétisme domaine par domaine. Sa fréquence d'oscillation est de 13,5 MHz qui est la fréquence autorisée dans l'industrie pour répondre aux normes sur l'émission des parasites radioélectriques. Sa consommation sous 20 Volts varie de 0,3 A, lorsqu'il n'y a pas de domaine dans l'entrefer de la tête de chauffe, à 0,6 A lors de la présence d'un domaine.

Il comprend essentiellement un transistor à effet de champ 10, une bobine en ferrite 12 de 47 $\mu$Henry, deux diodes Zener 11 en série et tête bêche pour limiter les surtensions, et un bobinage 13 de 5 spires entourant un tore en ferrite 14. Des dégagements 14a affinent l'entrefer, de l'ordre de 0,4 mm, pour concentrer les lignes de forces du champ magnétique dans les dimensions d'un domaine.

Le bobinage 13 peut avantageusement s'étendre sur les dégagements 14a, au plus près de l'entrefer, ce qui minimise les pertes. Dans ces conditions, la destruction d'un domaine d'informations peut se faire en un laps de temps de l'ordre de la seconde.

Le support d'informations tel que décrit et illustré, utilisé avec une tête de chauffage HF telle que décrite, permet de réaliser des cartes de crédit ou des tickets utilisables dans des dispositifs de paiement dont le coût est variable. Il se prête notamment particulièrement bien au paiement des taxes téléphoniques en des lieux où le stockage d'argent présente un risque.

Revendications

1.- Support d'informations comportant des éléments de mémoire magnétique réalisés par des couches successives de matériaux magnétiques et de matériaux diffusants, et destructibles de façon irréversible par élévation de température, caractérisé par le fait que le support (1) est isolant et qu'il comprend, sur au moins une de ses faces, une succession de domaines (2, 4), comportant une sous-couche (2) en métal conducteur de l'éléctricité, chacune d'entre elle étant recouverte par un élément de mémoire magnétique thermodestructible (4, 3, 4).

2.- Support d'informations selon la revendication 1, caractérisé par le fait que les couches magnétiques (3) et diffusantes (4) ont une épaisseur comprise entre environ 500 Å et 1000 Å chacune, et la sous couche conductrice (2) a une épaisseur comprise entre environ 5 $\mu$m et 40 $\mu$m.

3.- Support d'informations selon la revendication 1, caractérisé par le fait que chaque sous couche (2) est en cuivre, les couches magnétiques (3) en nickel cobalt, et les couches diffusantes (4) en indium, bismuth ou un alliage de plomb-étain.

## FIG. 1

## FIG. 2

Office européen
des brevets

**RAPPORT DE RECHERCHE EUROPEENNE**

EP 83 40 1444

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A,D | EP-A-0 040 561 (BATTAREL et al.)<br><br>--- | 1 | G 06 K 19/02<br>G 06 K 19/08<br>G 06 K 1/12 |
| A | FR-A-2 310 599 (LIENHARD et al.)<br><br>----- | 1 | |

**DOMAINES TECHNIQUES RECHERCHES (Int. Cl. 3)**

G 06 K
G 06 K

Le présent rapport de recherche a été établi pour toutes les revendications

| Lieu de la recherche<br>LA HAYE | Date d'achèvement de la recherche<br>14-11-1983 | Examinateur<br>FORLEN G.A. |
|---|---|---|